# EUROPEAN PATENT SPECIFICATION

(11) **EP 1 074 440 B1**
(45) Date of publication and mention of the grant of the patent: **31.03.2004**
(21) Application number: 00121966.6
(22) Date of filing: 19.02.1998
(51) Int. Cl.: B60R 25/02, B60R 25/04

(54) **Steering lock and ignition assembly**
Lenkschloss mit Zündvorrichtung
Verrou de direction et dispositif d'allumage

(30) Priority: 21.02.1997 US 37357 P
(43) Date of publication of application: 07.02.2001
(62) Divisional of application: 98102886.3
(73) Proprietor: Honda Giken Kogyo Kabushiki Kaisha, Minato-ku, Tokyo (JP)
(72) Inventor: Anzai, Hidehiko, Hilliard, OH 43026 (US)
(74) Representative: Liska, Horst, Dr.-Ing.

(56) References cited:
- EP-A- 0 742 127
- PATENT ABSTRACTS OF JAPAN vol. 6, no. 20 (M-110), 5 February 1982 (1982-02-05) & JP 56 138047 A (KOKUSAN KINZOKU KOGYO CO LTD), 28 October 1981 (1981-10-28)
- PATENT ABSTRACTS OF JAPAN vol. 15, no. 509 (M-1195), 24 December 1991 (1991-12-24) & JP 03 224978 A (ALPHA CORP.), 3 October 1991 (1991-10-03)

## Description

### BACKGROUND OF THE INVENTION

### FIELD OF THE INVENTION

The present invention is directed to a steering lock and ignition assembly.

### DESCRIPTION OF THE PRIOR ART

The prior art steering lock and ignition assemblies are well known and use a conventional mechanical key.

In this conventional key system, the user of the. vehicle must carry a conventional metal key which enables him to operate the ignition switch as well as unlock other devices such as the vehicle doors, the glove box, and the trunk. If the key is lost or stolen, the user will not have access to the vehicle. If the owner's key operates all the vehicle locks, and the owner then gives his key to a third party such as a driver or valet, that person will have access to all the vehicle locks. Furthermore, if the driver gives his key to a non-driver such as a child, so that the non-driver can enter the vehicle, the non-driver can then insert the key into the ignition, start the vehicle and drive the vehicle.

Thus, the prior art systems require the carrying of a key which can be lost, misplaced or damaged. Furthermore, the prior an systems do not identify a particular person and therefore provide a level of access or authorization to the person who possesses the key.

From JP-A-56138047, there is known a steering lock and ignition asembly according, to the preamble of claim 1, which comprises a manually operable knob rotatable between a first rotational position and a second rotational position. In the first rotational position, a steering wheel of a vehicle equipped with the steering lock and ignition assembly is locked and the vehicle cannot be started. A latch pin operable by a solenoid engages with a locking recess of a rotator coupled to the knob. By proper identification of a user of the vehicle, the solenoid is activated so as to disengage the latch pin from the rotator. Then, the knob can be turned to the second rotational position in which the steering lock is unlocked and an ignition switch is operated to start the engine of the vehicle. The known steering lock and ignition assembly can be used with a keyless vehicle operation identification and authorization system and does not require a conventional metal key for operation. A similar steering lock and ignition assembly is known from EP-A-0 742 127.

It is an object of the invention to provide a steering lock and ignition assembly which does not require a conventional metal key for operation.

The present invention provides a steering lock and ignition assembly according to claim 1.

Such a steering lock and ignition assembly can be used with a keyless vehicle operation identification and authorization system which positively identifies the operator of the vehicle, e.g. by means of a biometric characteristic such as a user's fingerprint, retina or voice.

The steering lock and ignition assembly comprises a housing, an ignition switch within the housing, a steering lock within the housing, a knob, and a coupling provided with the knob. The assembly is connected to the steering lock when the knob is retracted and rotated to one of at least two positions. The knob is connected to the ignition switch when the knob is extended and rotated to another one of the at least two positions. Furthermore, the coupling permits extension and retraction of the knob relative to the housing and permits rotation of the knob relative to the housing. A stop inhibits the rotation until the knob is extended.

### BRIEF DESCRIPTION OF THE DRAWINGS

Fig. 1 is a side view of the steering lock and ignition assembly with a knob in a retracted position.
Fig. 2 is a sectional view of the steering lock and ignition assembly with the knob in the extended position.
Fig. 3 is an end view of the knob in the extended lock position.

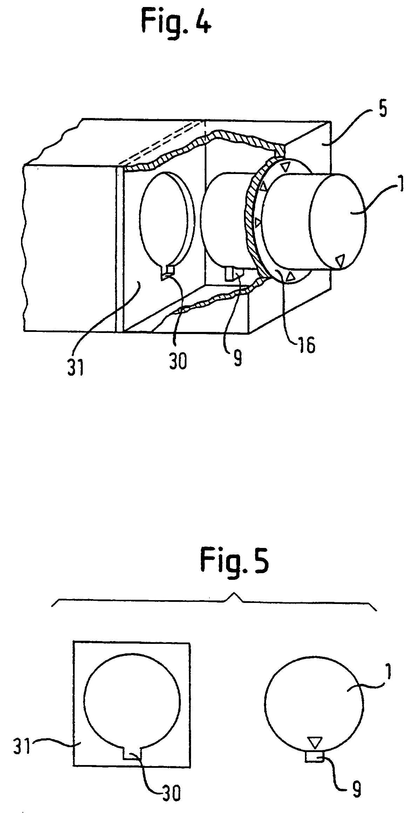

Fig. 4 is a simplified perspective view showing a retraction prevention feature of the present invention.
Fig. 5 is a front view showing the retraction prevention plate and the retraction tab on the ignition knob.

### DETAILED DESCRIPTION OF THE PREFERRED EMBODIMENT

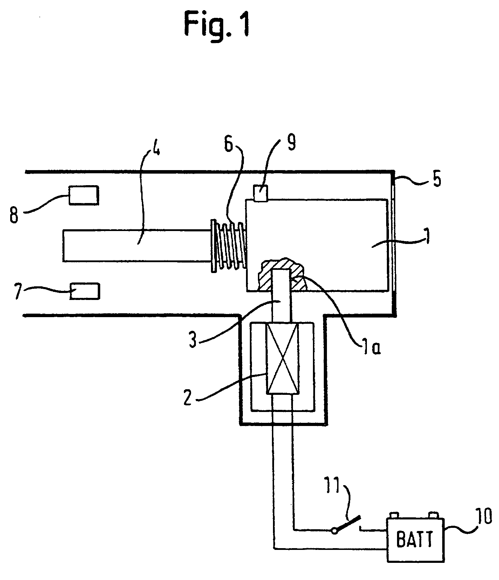

Referring to Figs. 1-3, the steering lock and ignition assembly comprises a housing 5, an ignition knob 1, spring 6, solenoid 2, stopper pin 3, and indication plate 16. The ignition knob 1 is mounted on a shaft 4. The shaft 4 allows the ignition knob 1 to extend from and retract into the housing and to rotate. The shaft also interconnects the ignition knob with the ignition switch 8 and steering lock assembly 7.

In the secure position as shown in Fig. 1, the steering lock and ignition assembly is secured since the ignition knob 1 is retracted into the housing 5 so that an ignition switch 8 cannot be activated. The ignition switch 8 is conventionally known and therefore not shown in detail. The ignition knob 1 is in the LOCK position 12 such that a steering lock assembly 7 is locked and cannot be rotated. The steering lock assembly 7 is conventionally known assembly and therefore is not shown in detail. The ignition knob 1 is held in place by stopper pin 3 which is extended and inserted into recess 1a of ignition knob 1. The solenoid 2 is in a deenergized state when stopper pin 3 is extended.

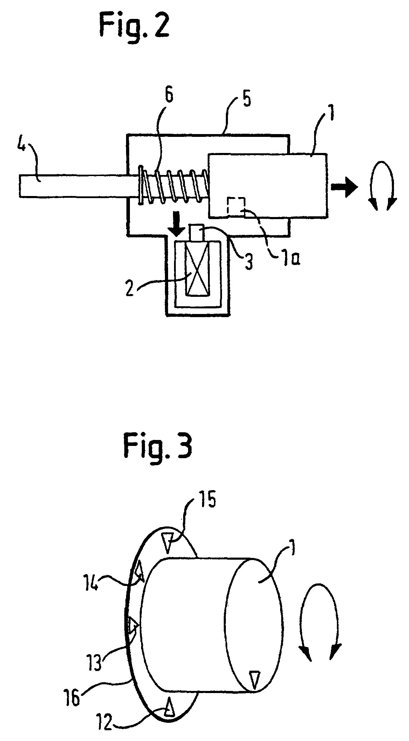

When a user identification and authorization system, a remote signal transmitter or code from a keypad provides authorization for the ignition switch 8 to be activated (i.e., when the user of the vehicle has authorization to start and drive the vehicle), switch 11 is closed and power from battery 10 is applied to solenoid 2. The solenoid 2 is energized and stopper pin 3 of solenoid 2 is pulled in by a magnetic force of the solenoid (see Fig. 2). Since the stopper pin 3 no longer engages recess 1a of the ignition knob 1, the ignition knob 1 is pushed by the force of spring 6 into a projected or extended position.

Once the ignition knob 1 is extended through the indicator plate 16 by spring 6, the solenoid 2 is deenergized and the stopper pin 3 of the solenoid is moved down by the force of a spring (not shown) inside solenoid 2. Thus, with the ignition knob 1 now extended, the steering lock assembly 7 can now be unlocked and the vehicle started by activating the ignition switch 8.

In order to unlock the steering lock assembly 7, the ignition knob 1 must be rotated from the LOCK position 12 shown in Fig. 3 to the ACC position 13. Ignition knob 1 has a means which allows the ignition knob 1 to rotate passed a stop engagement member 9 from the LOCK position 12 to the ACC position 13. When the ignition knob 1 is turned from the LOCK position 12 to the ACC position 13, the steering lock assembly 7 is unlocked. Furthermore, the steering lock assembly 7 is retained in the unlocked position until the ignition knob 1 is completely pushed into the housing 5. Thus, accidental locking of the steering lock assembly 7 can be avoided. Furthermore, with the ignition knob 1 in the ACC position 13, the vehicle battery 10 is connected to the vehicle accessories to provide power thereto such as the radio, windows, etc. as in a conventional metal key system.

The steering lock assembly 7 remains in the same unlocked position when the ignition knob 1 is turned from the ACC position 13 to the ON position 14 or is turned from the ON position 14 to the START position 15. Thus, the steering lock assembly 7 remains unlocked.

The vehicle can be started by rotating the ignition knob 1 from the ACC position 13 to the START position 15 such that the ignition switch 8 is activated. After starting the vehicle, the ignition knob 1 is released by the driver and the ignition knob 1 returns to the ON position 14 as is conventional with a metal key system. In the START position 15, the vehicle battery 10 provides power to the ignition switch 8 and start switch (not shown). In the ON position 14, the vehicle battery 10 provides power to the vehicle accessories and ignition switch 8.

When the driver of the vehicle wishes to stop and park the vehicle, the ignition knob 1 is turned counter clockwise from the ON position 14 to the ACC position 13. The steering lock assembly 7 remains in the unlocked position. The ignition knob 1 cannot be retracted into the housing 5 until a retraction tab 9 on the ignition knob 1 is aligned with the notch 30 of a retraction prevention plate 31. In the ACC, ON and START positions, the tab 9 is in abutment with the retention plate 31. The ignition knob 1 cannot be retracted until it is rotated to the LOCK position 12 where the tab 9 and the notch 30 are in alignment. Only then can the ignition knob 1 be pushed into the housing 5 flush with the face of the indication plate 16. When the ignition knob 1 enters into the housing 5 completely, the steering lock assembly 7 finally locks the steering shaft against rotation. Furthermore, the stopper pin 3 snaps into the recess 1a of the ignition knob 1 so as to retain the ignition knob 1 within the housing 5 until the solenoid 2 is again energized.

With the steering lock and ignition assembly of the present invention, a vehicle can be started without using a conventional key which can be lost, misplaced or damaged.

While the steering lock and ignition assembly of the present invention may be activated by a signal from a remote transmitter or code from a keypad, the present invention may be used with a keyless authorization system which identifies the owner or primary operator by means of a biometric characteristic such as a user's fingerprint, retina or voice.

The present invention may be embodied in other specific forms without departing from the spirit or essential characteristics thereof. The presently disclosed embodiments are therefore to be considered in all respects as illustrative and not restrictive, the scope of the invention being indicated by the appended claims rather than the foregoing description, and all changes which come within the meaning and range of equivalency of the claims are therefore to be embraced therein.

A steering lock and ignition assembly has a two position knob for operating an ignition switch of a vehicle and for operating a steering lock mechanism of the vehicle. The knob is retained within a housing by a latch device until authorization by an authorization system is provided to the latch device. When authorization is received, the latch device releases the knob from the housing so that the steering lock mechanism can unlock the steering shaft and the ignition switch can be operated to start the vehicle.

## Claims

1. A steering lock and ignition assembly comprising:
a housing (5);
a knob (1);
a coupling (4, 9) connecting said knob (1) to said housing (5) and providing said knob (1), relative to said housing (5), with an extended position, a retracted position and at least two rotated positions so as to lock a steering lock (7) in a first one of said at least two rotated positions and to operate an ignition switch (8) in another one of said at least two rotated positions,
said coupling (4, 9) including a stop (9) for preventing rotation of said knob (1) when said knob (1) is in its retracted position and simultaneously in said first one of said at least two rotated positions, **characterized in that**
said stop (9) inhibits rotation of said knob (1) until said knob (1) is in its extended position so as to unlock said steering lock.

2. The steering lock and ignition assembly of claim 1, further comprising:
a spring (6) connected to said knob (1), said spring (6) biasing said knob (1) to extend from said housing (5).

3. The steering lock and ignition assembly of claim 2, further comprising:
a latch (1a, 2, 3) holding said knob (1) flush to said housing (5) when said knob (1) is retracted within said housing (5).

4. The steering lock and ignition assembly of claim 3, wherein said latch (1a, 2, 3) comprises:
a solenoid (2);
a pin (3) displaceable by said solenoid (2); and
a recess (1a) in said knob (1);
said pin (3) releasably engaging said recess (1a) when said knob (1) is in said retracted position.

## Patentansprüche

1. Lenkschloss- und Zündanordnung, umfassend:
ein Gehäuse (5);
einen Knopf (1);
eine Kupplung (4, 9), die den Knopf (1) mit dem Gehäuse (5) verbindet und den Knopf (1) relativ zu dem Gehäuse (5) mit einer ausgefahrenen Stellung, einer eingefahrenen Stellung und zumindest zwei Drehstellungen versieht, um ein Lenkschloss (7) in einer ersten der zumindest zwei Drehstellungen zu sperren und einen Zündschalter (8) in einer anderen der zumindest zwei Drehstellungen zu betätigen,
wobei die Kupplung (4, 9) einen Anschlag (9) enthält, um eine Drehung des Knopfs (1) zu verhindern, wenn sich der Knopf (1) in seiner eingefahrenen Stellung und gleichzeitig in der einen ersten der zumindest zwei Drehstellungen befindet,
**dadurch gekennzeichnet, dass**
der Anschlag (9) eine Drehung des Knopfs (1) unterbindet, bis der Knopf (1) in seiner ausgefahrenen Stellung ist, um das Lenkschloss zu entsperren.

2. Lenkschloss- und Zündanordnung nach Anspruch 1, ferner umfassend:
eine mit dem Knopf (1) verbundene Feder (6), wobei die Feder (6) den Knopf (1) vorspannt, sodass er aus dem Gehäuse (5) ausfährt.

3. Lenkschloss- und Zündanordnung nach Anspruch 1, ferner umfassend:
eine Sperre (1a, 2, 3), die den Knopf (1) in Flucht zu dem Gehäuse (5) hält, wenn der Knopf (1) in dem Gehäuse (5) eingefahren ist.

4. Lenkschloss- und Zündanordnung nach Anspruch 3, wobei die Sperre (1a, 2, 3) umfasst:
ein Solenoid (2);
einen Stift (3), der durch das Solenoid (2) verlagerbar ist; und
eine Vertiefung (1a) in dem Knopf (1),
wobei der Stift (3) lösbar in die Vertiefung (1a) eingreift, wenn der Knopf (1) in der eingefahrenen Stellung ist.

## Revendications

1. Verrou de direction et d'allumage comprenant :
un boîtier (5) ;
un bouton (1) ;
un moyen de couplage (4, 9) pour relier ledit bouton (1) audit boîtier (5) et doter ledit bouton (1), par rapport audit boîtier (5) d'une position déployée, d'une position rétractée et d'au moins deux positions de rotation de manière à verrouiller un verrou de direction (7) dans une première desdites au moins deux positions de rotation et à actionner un commutateur d'allumage (8) dans une autre desdites au moins deux positions de rotation,
ledit moyen de couplage (4, 9) comprenant une butée (9) pour empêcher la rotation dudit bouton (1) lorsque ledit bouton (1) est dans sa position rétractée et, simultanément, dans ladite première desdites au moins deux positions de rotation, **caractérisé en ce que**
ladite butée (9) inhibe la rotation dudit bouton (1) jusqu'à ce que ledit bouton (1) soit dans sa position déployée de manière à déverrouiller ledit verrou de direction.

2. Verrou de direction et d'allumage selon la revendication 1, comprenant en outre : un ressort (6) relié audit bouton (1), ledit ressort (6) poussant ledit bouton (1) pour qu'il se déploies hors dudit boîtier (5).

3. Verrou de direction et d'allumage selon la revendication 2, comprenant en outre : un verrou (1a, 2, 3) maintenant ledit bouton (1) aligné avec ledit boîtier (5) quand ledit bouton (1) est rétracté à l'intérieur dudit boîtier (5).

4. Verrou de direction et d'allumage selon la revendication 3, dans lequel ledit verrou (1a, 2, 3) comprend :
un solénoïde (2) ;
un ergot (3) actionné par ledit solénoïde (2) ; et
un logement (1a) dans ledit bouton (1) ;
ledit ergot (3) s'engageant de façon réversible dans ledit logement (1a) quand ledit bouton (1) est dans ladite position rétractée.
